# EUROPÄISCHE PATENTSCHRIFT

(11) **EP 2 539 205 B1**
(45) Veröffentlichungstag und Bekanntmachung des Hinweises auf die Patenterteilung: **18.12.2013**
(21) Anmeldenummer: 11706232.3
(22) Anmeldetag: 25.02.2011
(51) Int. Cl.: B62D 1/28, G05D 1/02

(54) **TRANSPORTSYSTEM MIT TRAKTOREN**
TRANSPORT SYSTEM WITH TRACTORS
SYSTÈME DE TRANSPORT AVEC TRACTEURS

(30) Priorität: 25.02.2010 DE 102010009323
(43) Veröffentlichungstag der Anmeldung: 02.01.2013
(73) Patentinhaber: Telejet Kommunikations GmbH, 61462 Königstein (DE)
(72) Erfinder: JESCHKE, Klaus, 65779 Kelkheim (DE)
(74) Vertreter: Alber, Norbert
(86) Internationale Anmeldenummer: PCT/EP2011/052828
(87) Internationale Veröffentlichungsnummer: WO 2011/104349

(56) Entgegenhaltungen:
- EP-A1- 2 048 560
- WO-A1-02/46031
- DE-A1- 19 516 371
- GB-A- 2 143 969

## Beschreibung

### I. Anwendungsgebiet

Die Erfindung betrifft ein Transportsystem, in dem die Produkte chaotisch, also unabhängig voneinander und auch mit wechselnder Reihenfolge, transportiert werden und deren Transportpositionen nur dem Zentralrechner bekannt ist.

### II. Technischer Hintergrund

Solche Transportsysteme sind in vielen Varianten bekannt.

Eine sehr häufige Variante sind so genannte Flurförderfahrzeuge: Dabei fahren ferngelenkte Fahrzeuge - auf denen die zu transportierenden Produkte unmittelbar angeordnet sind oder die Anhänger, auf denen sich die Produkte befinden, hinter sich herziehen - ohne formschlüssige Führung auf dem Boden einer Produktionshalle.

Diese Flurförderfahrzeuge werden geführt anhand von nicht sichtbaren Einrichtungen, die im Boden eingelassen sind, beispielsweise Induktionsleitungen oder ähnlichem, so dass die Flurförderfahrzeuge wie ein schienengeführtes Fahrzeug nur entlang dieser meist unsichtbaren Leit- und Führelemente verfahren können.

Sollen die Flurförderfahrzeuge davon abweichend eine neue Bahn fahren können, für die bisher keine Leitelemente im Untergrund vorhanden sind, müssen diese sehr aufwendig erst in den Untergrund eingebracht werden.

Des Weiteren bewegen sich solche Flurförderfahrzeuge häufig auf den gleichen Flächen, auf denen Mitarbeiter gehen, und müssen daher einen hohen Aufwand an Sicherheitseinrichtungen und Sensorik besitzen, um Zusammenstöße mit Mitarbeitern zu vermeiden.

Aus diesem Grund ist auch die Fahrgeschwindigkeit solcher Flurförderfahrzeuge sehr gering, sofern sie sich nicht auf völlig abgetrennten Transportwegen bewegen, was dann allerdings einen erhöhten Flächenbedarf zur Folge hat.

Derartige Flurförderfahrzeuge werden häufig zum Transportieren von relativ schweren Lasten - oft mehr als 200 kg schweren Lasten - benutzt.

Daneben gibt es viele Bauformen von Transportsystemen mit Fahrzeugen, die formschlüssig entlang von Schienen hängend oder auf diesen rollend verfahren werden, wobei diese Schienen und damit die Transportwege in jeder beliebigen Höhe, aufgeständert auf dem Untergrund oder abgehängt von der Decke eines Gebäudes, verlaufen können, je nachdem, auf welcher Höhe die Bearbeitungspositionen, beispielsweise Maschinen, angefahren werden sollen, an denen das auf den Anhängern oder Fahrzeugen befindliche Produkt bearbeitet be- oder entladen werden soll.

Die Größe und Stabilität der Schienen und Fahrzeuge ist dabei natürlich an Größe und Gewicht der zu transportierenden Produkte angepasst, so dass solche Schienenlösungen in ganz unterschiedlichen Abmessungen existieren.

Ein prinzipieller Nachteil aller Fahrzeuge, die sich entlang von Schienen - seien es körperlich ausgebildete formschlüssige Schienen oder auch unsichtbar im Untergrund eingelassene Schienen als Leit- und Führungslemente - bewegen, anhaftet, ist jedoch, dass ein wirklich unabhängiges Verfahren der einzelnen Fahrzeuge nicht möglich ist:
- Gegenseitiges Überholen der Fahrzeuge ist nur auf entsprechenden Ausweichstrecken oder mit mehreren parallel führenden Schienen möglich,
- jede Abzweigung oder Kreuzung erfordert ein aufwändiges entsprechendes Leitelement an genau der gewünschten Stelle,
- das Umgestalten der Fahrwege erfordert einen sehr hohen Aufwand des Verlegens neuer Schienen,
- ein Zwischenlagern, also Puffern, von Produkten und Fahrzeugen ist ebenfalls nur auf separat hierfür vorgesehenen Nebenschienen möglich und auch dort wiederum nur in der Reihenfolge des Ankommens und Abfahrens der einzelnen Fahrzeuge, nicht wahlfrei durcheinander.

EP 2 048 560 A1 zeigt gemäß dem Oberbegriff des Anspruchs 1 ein Beispiel einer Transportvorrichtung mit Führungselementen in Form von Führungslinien. Damit sich entgegenkommende Fahrzeuge ausweichen können wird ein Pufferbereich im Streckennetz bereitgestellt, in dem die Führungslinie in zwei parallel verlaufende Führungslinien aufgespalten wird.

Weitere Beispiele für Transportvorrichtungen mit linienförmigen Führungselementen und Ausweichbereichen in Form von parallel verlaufenden Führungselementen sind aus DE 195 16 371 A1 und GB 2143969 A bekannt.

### III. Darstellung der Erfindung

### a) Technische Aufgabe

Es ist daher die Aufgabe gemäß der Erfindung, ein Verfahren sowie eine Vorrichtung zum Transportieren von Produkten zu schaffen, bei dem trotz verhältnismäßig geringer Kosten die Transportleistung dem Bedarf sehr leicht angepasst werden kann, ein chaotischer Transport von Produkten möglich ist, und die Transportbahnen sehr leicht verändert werden können.

### b) Lösung der Aufgabe

Diese Aufgabe wird durch die Merkmale der Ansprüche 1 und 6 gelöst. Vorteilhafte Ausführungsformen ergeben sich aus den Unteransprüchen.

Das Grundprinzip des erfindungsgemäßen Transportverfahrens besteht darin, dass die Produkte auf Anhängern, die von Traktoren als Gespann gezogen werden, oder den Traktoren selbst stehen oder liegen, und diese - mit einem oder mehreren gleichen oder verschiedenen Produkten - beladenen Anhänger oder Gespanne auf einer Transportbahn entlang körperlich nicht unterteilten Fahrtrouten verfahren werden, die von einer Zentralsteuerung für jeden einzelnen Transportfall einzeln ermittelt und vorbestimmt wird.

Wenn Gegenverkehr notwendig ist, müssen die Transportbahnen deshalb entweder durchgängig die doppelte Breite von Traktor oder Anhänger besitzen oder zumindest ausreichend viele verbreiterte Ausweichstellen aufweisen.

Insofern handelt es sich um ein so genanntes chaotisches Transportsystem, bei dem die einzelnen Traktoren oder Gespanne unabhängig voneinander bewegt werden können, insbesondere durch Überhol- oder Ausweichvorgänge ihre Reihenfolge ändern können, so dass die konkrete Lagerposition eines konkreten Produktes nur der Zentralsteuerung bekannt ist.

Die Anhänger, die selbst keinen Antrieb besitzen, werden mit Hilfe von Traktoren, die einen eigenen Antrieb besitzen, auf der Transportbahn bewegt, entlang von Fahrtrouten, die ein Zentralrechner, der alle Traktoren steuert, vorgibt, beispielsweise von einer Beladestation, an der der leere Anhänger mit einem oder mehreren Produkten beladen werden, zur Bearbeitungsposition oder umgekehrt von der Bearbeitungsposition zu einer Entladestation, wo das Produkt wieder vom Anhänger entnommen wird, und eventuell weiter zu einer Warteposition für leere Anhänger, die sich aber außerhalb der eigentlichen Transportbahn befinden kann.

An den Bearbeitungs-Positionen sollen die Produkte während der Bearbeitung bevorzugt auf dem Traktor oder Anhänger verbleiben, während sie bearbeitet werden, beispielsweise von einer Maschine bedruckt, gelabelt, geschweißt oder Ähnliches werden, was einen sicheren Stand der die Produkte tragenden Anhänger oder Traktoren auf dem Untergrund erfordert. Selbst eine Kraftbeaufschlagung der Produkte und damit der darunter befindlichen Anhänger oder Traktoren von oben muss bis zu einem festgelegten Maß möglich sei.

Die Transportbahn soll dabei körperlich möglichst wenig unterteilt sein, also im Idealfall eine ebene, horizontale oder nur leicht ansteigende, Fläche sein. Natürlich kann die Transportbahn auf mehreren Etagen übereinander verteilt sein, was dann ein Verbringen des beladenen Anhängers, gegebenenfalls auch zusammen mit dem Traktor, von einer Etage in die andere erfordert, beispielsweise mit Hilfe einer Steigung oder eines Aufzuges. Ebenso können spezielle Bereiche, z. B. ein Kühlbereich, abgetrennt und nur über eine Schleuse von den Traktoren angefahren werden.

Damit die Traktoren einer vorgegebenen Fahrtroute fahren können und Anhänger an vorbestimmte Positionen, insbesondere Bearbeitungs-Positionen, verfahren als auch aufnehmen oder abstellen können, sind unterschiedliche Arten von Navigationssystemen für die Traktoren möglich.

Erfindungsgemäß bevorzugt wird jedoch ein optisches Orientierungssystem der Traktoren auf der Transportbahn, in dem auf der Transportbahn selbst oder an der Decke darüber oder an einem seitlichen Rand neben der Transportbahn optische Markierungen angeordnet sind, an denen sich die Traktoren mit Hilfe entsprechender, an den Traktoren vorhandener, optischer Sensoren orientieren:

Eine bevorzugte Art von optischen Markierungen sind dabei Barcodes in Strichform oder in zweidimensionaler Form, die sich insbesondere in vielfacher Anordnung auf der Oberseite der Transportbahn befinden. In der bevorzugten Ausführung ist die gesamte Transportbahn im Wesentlichen flächendeckend mit Barcodes bedruckt, an denen sich die Traktoren orientieren. Auf einer Bodenplatte befinden sich dann keine zwei identischen Barcodes, so dass das Erkennen des Barcodes gleichzeitig eine Positionsbestimmung innerhalb dieser Platte darstellt, und wegen der Ausrichtung der Barcodes auch eine Richtungsbestimmung des zum Beispiel Traktors.

Denkbar ist jedoch auch die Kombination der optischen Markierungen wie etwa der Barcodes mit einem in einer oder zwei sich kreuzenden Raumrichtungen aufgebrachten, regelmäßigen Linienraster. Die Barcodes können sich dann entweder innerhalb jedes Rasterfeldes an einer vorbestimmten Position, jeweils z. B. Flächen füllend oder in derselben Ecke, befinden oder auch genau im freigelassenen Kreuzungsbereich der Rasterlinien oder ähnliches.

Der Vorteil dieses Transportsystems besteht darin, dass die Kosten der Transportbahnen einerseits und die der eingesetzten Traktoren und vor allem der Anhänger andererseits relativ gering ist. Auch die Erstellung der Transportbahn selbst ist sehr kostengünstig, da sie keine spezifischen Installationen wie passgenaue Schienen, Schienenanschlüsse, Weichen, Stromzuführungen etc. benötigen, sondern lediglich eine stabile, möglichst ebene Transportbahn sein muss.

Die Transportbahnen bestehen vorzugsweise aus einzelnen Bodenplatten, die fortlaufend hintereinander gesetzt werden, und mit denen auch Abzweigungen und Kreuzungen der Transportbahnen realisiert werden können, wofür außer der länglich rechteckigen Grundform der Bodenplatte auch Sonderformen wie z. B. Bögen existieren können. Bevorzugt sind jedoch gleich gestaltete Bodenplatten auch immer mit dem gleichen Muster an optischen Markierungen wie etwa Barcodes bedruckt, wodurch die Herstellung der Bodenplatten einfach und kostengünstig wird. Bögen, Abzweigungen oder auch nur Innen-Bögen zum Ansetzen an den rechtwinkligen Zwischenwinkel zwischen zwei winklig aneinander stoßenden rechteckigen Bodenplatten können durch einfaches Aussägen aus solchen einheitlich hergestellten und einheitlich bedruckten rechteckigen Bodenplatten ebenfalls sehr kostengünstig hergestellt werden.

Um zu erkennen, dass ein Wechsel von einer zur nächsten Bodenplatte stattgefunden hat, und insbesondere um die Position zu erkennen, wenn zum Beispiel ein Traktor manuell an einer bestimmten Stelle der Transportbahn eingesetzt wurde, können Standortmarkierungen, die den Standort innerhalb des Transportsystems absolut angeben, entweder in den Fugen zwischen aneinander grenzenden Bodenplatten vorhanden sein oder separat neben der Transportbahn, beispielsweise einer Randaufwölbung der Transportbahn, die als Formschlüssige Absturzsicherung dient, in Form zusätzlicher Absolut-Markierungen, etwa wiederum Barcodes, vorhanden sein.

Da die Bodenplatten lediglich möglichst fugenlos und mit nicht allzu großen Steigungen verlegt werden müssen, ist auch der Aufbau von Führungsbahnen aus solchen Bodenplatten sehr einfach. Dadurch können Führungsbahnen nicht nur für momentan benötigte Fahrtrouten sondern auch eventuell erst in der Zukunft benötigte Fahrtrouten vorgesehen werden, und ebenso können die Transportbahnen entweder durch Aufständern gegenüber dem Boden oder durch Abhängen von der Decke getrennt von menschlichen Bewegungsflächen gebaut werden, wodurch keine Kollision mit menschlichen Bedienern zu befürchten ist und auf eine aufwendige diesbezügliche Sicherheitsausstattung der Traktoren verzichtet werden kann.

Der Vorteil einer solchen Transportvorrichtung besteht darin, dass die benötigten Transportbahnen sehr einfach und kostengünstig herzustellen und aufzubauen und auch umzubauen sind, und das Transportvolumen durch Vergrößern der Anzahl an Traktoren und eventuell Verbreitern der Transportbahnen sehr schnell dem Bedarf angepasst werden kann, während die Zentralsteuerung der Vorrichtung ohnehin - je nach Ausbaustufe - eine sehr große Anzahl von Traktoren gleichzeitig und unabhängig voneinander steuern kann. Mit einem solchen Transportsystem ist darüber hinaus ein sehr flexibler Transport von Produkten möglich, indem ohne Probleme Überholmanöver, Gegenverkehr, Zwischenlagern, Auf- und Abladen an beliebigen Stellen usw. realisiert werden kann, ohne hierfür jeweils spezifische aufwendige Umbauarbeiten an den Transportbahnen vornehmen zu müssen.

Im Fall mehrerer Etagen der Transportbahn übereinander ist der vertikale Abstand zwischen den einzelnen Etagen nur so groß, wie er für die größten, also höchsten, einzulagernden Produkte benötigt wird. Dennoch kann ein Bediener wegen der meist relativ geringen Breite der Transportbahnen per Hand von außen in das System eingreifen, und beispielsweise einen liegengebliebenen Traktor von Hand weiterbewegen oder entnehmen, ein vom Anhänger herabgefallenes Produkt auf den Anhänger setzen oder Ähnliches, so dass aufwändige technische Maßnahmen für die automatische Behebung von Störungsfällen nicht notwendig sind.

Dementsprechend flach müssen natürlich auch die Traktoren und vor allem die Anhänger sein, und vor allem müssen die Traktoren auf der Transportbahn völlig autark agieren können:
Dies bedeutet, dass sie - natürlich in Abhängigkeit von empfangenen Befehlen von der Zentralsteuerung, die sie drahtlos erhalten - einen leeren oder beladenen Anhänger anfahren, ankuppeln, auf einem von der Zentralsteuerung anhand der dort bekannten momentanen Transportlandschaft vorgegebenen Fahrtroute oder Verfahrbereiche verfahren, in der Bearbeitungsposition selbsttätig einparken und gegebenenfalls abkuppeln, und dann z. B. zu einer Parkposition für Traktoren fahren und gegebenenfalls dort ihren Energiespeicher nachladen.

Die Anhänger können relativ kostengünstig hergestellt werden, da sie über keinen Antrieb verfügen. Sie sind an der Oberseite an die zu transportierenden Produkte vorzugsweise angepasst und an deren Unterseite befinden sich zum Beispiel zwei oder vier Räder oder Gleitflächen, mit deren Hilfe der Anhänger gleitend über die Ladefläche geschoben oder gezogen wird, und die auch eine Belastung während der Bearbeitung des Produktes an einer Bearbeitungsstation verkraften müssen. Es können auch mehrere Arten von Anhängern im gleichen Lager benutzt werden, beispielsweise Anhänger unterschiedlicher Größe, mit oder ohne Unterteilung in einzelne Ablagemulden oder in unterschiedlich große Ablagemulden.

Der Anhänger kann auch seitlich aufragende Seitenwände besitzen, um ein zu leichtes Überhängen oder Herabfallen von Produkten zu vermeiden.

Die notwendige Kupplung - vorzugsweise nicht nur an einer sondern an mindestens zwei einander gegenüberliegenden Stirnseiten - zwischen Anhänger und Traktor, die ja ebenfalls automatisch funktionieren muss, wird dabei so gestaltet, dass sich am Traktor das teurere Kupplungselement befindet, und das Kupplungselement am Anhänger möglichst kostengünstig ist, im Idealfall beispielsweise nur aus definiert angeordneten und dimensionierten Löchern in der Seitenwand besteht, in die entsprechende Kupplungselemente des Traktors eingreifen können.

Das Ankuppeln eines Traktors an einen Anhänger kann auch ein geringfügiges Anheben des Anhängers auf der Seite der ergriffenen Kupplung bewirken, um auf dieser Seite den Anhänger vom Untergrund, also der Transportbahn, abzuheben, was das Verhalten eines Gespannes aus Traktor und Anhänger beim Ziehen oder Schieben berechenbarer macht.

Die Traktoren besitzen eine eigene Onboard-Steuerung, die die Realisierung der Fahrtaufträge durchführt und in der Regel mehrere Prozessoren umfasst.

Daneben können mindestens eine, beispielsweise hinsichtlich der Blickrichtung schwenkbare, Kamera und/oder getrennte Kameras für Vorwärts-, Rückwärts- und/oder Seitwärtsrichtungen vorhanden sein. Diese Kameras müssen zum einen in der Lage sein, die Barcodes, die an Anhängern angeordnet sind, zu identifizieren und auszuwerten, und sollten darüber hinaus eine Bildbearbeitungs-Einheit mit umfassen, die in der Traktorsteuerung mit umfasst ist, um zumindest beim Ankuppeln - falls dies nicht nur manuell sondern auch automatisch erfolgen soll -, besser auch in anderen Fällen, automatisch einen seitlichen Versatz und/oder den Abstand zum anzukuppelnden Anhänger erkennen zu können. Falls zusätzlich zu den relativen Barcodemarkierungen innerhalb einer Bodenplatte absolute Barcodemarkierungen in den Fugen zwischen zwei Bodenplatten, an der randseitigen Erhöhung oder andernorts vorhanden sind, muss hierauf ebenfalls eine Kamera gerichtet sein.

Alternativ und/oder zusätzlich können die Traktoren mindestens eine LaserLichtquelle tragen, der eine Lichtlinie auf den Boden und/oder einen anzukoppelnden Anhänger projiziert, und mit Hilfe eines Berechnungsverfahrens, wie etwa des Lichtschnitt-Triangulationsverfahrens, erkennt, wo die Ecke des Anhängers steht und ob ein Seiten- und Winkelversatz zum ankuppelnden Traktor vorliegt.

Darüber hinaus besitzt jeder Traktor auf der Rückseite und/oder der Vorderseite und den Seiten einfache Abstandssensoren, um nach vorne beim Vorwärtsfahren drohende Kollisionen rechtzeitig zu bemerken und ebenso beim Rückwärtsfahren ohne Anhänger, und darüber hinaus beim Rückwärtsfahren zum Zweck des Ankuppelns den Abstand und einen Winkelversatz zum Anhänger festzustellen, was dadurch möglich ist, dass auf der Heckseite zwei in Querrichtung beabstandete Abstandssensoren vorhanden sind.

Sollte der Traktor an der automatischen Umsetzung eines von der Zentralsteuerung erhaltenen Fahrbefehls scheitern - egal, ob ein anzukuppelnder Anhänger wider Erwarten seine Position verändert hat, ein Fahren in der vorgesehenen Richtung wegen einer durchhängenden Bodenplatte nicht möglich ist oder Ähnliches - so kann als Notmaßnahme der Traktors nach dem Hindernis neu aufgesetzt werden.

Die Kommunikationsmöglichkeiten des Traktors umfassen auch die Möglichkeit, dass zwei Traktoren direkt miteinander kommunizieren, also nicht nur über die Zentralsteuerung, beispielsweise, um gemeinsam eine Aufgabe zu lösen wie etwa eine Kollision zweier Traktoren an einer Kreuzung zu vermeiden.

Bevorzugt werden die Traktoren alle gleich gestaltet sein, jedoch können abhängig von der Bandbreite der zu transportierenden Produkte auch unterschiedliche Traktoren, beispielsweise unterschiedlich große und unterschiedlich leistungsstarke, Traktoren eingesetzt werden.

Der Zentralrechner gibt für jede einzelne Fahrt jedes einzelnen Traktors nicht nur Start- und Zielposition des Verfahrweges vor, sondern auch zumindest den zur Verfügung stehenden Verfahrbereich, besser die genaue Fahrtroute, die er in Kenntnis der momentan vorhandenen Transportlandschaft - also an welchen Stellen die Transportbahn von beladenen oder unbeladenen Anhängern oder wartenden Traktoren besetzt ist - festlegt. Zusätzlich werden natürlich auch die Zeitpunkte, also der Startzeitpunkt, gegebenenfalls die Verfahrgeschwindigkeit und damit auch der zeitliche Verlauf der Fahrtroute von der Zentralsteuerung exakt vorgegeben, denn nur dadurch können bei vielen gleichzeitig im Einsatz befindlichen Traktoren Kollisionen vermieden werden.

Die Onboard-Steuerung meldet an die Zentralsteuerung beispielsweise die aktuelle Position immer zurück, zumindest jedoch das Überfahren bestimmter bevorzugter Punkte, wie etwa Kreuzungen, oder die Grenzen zwischen den einzelnen freigegebenen Bereichen.

Das Durchfahren der einzelnen freigegebenen Bereiche kann von der Zentralsteuerung nicht nur von bestimmten zeitlichen Limits abhängig gemacht werden, sondern auch vom Auftreten anderer Ereignisse, wie beispielsweise das Queren eines anderen Traktors oder Gespannes, bevor der zu steuernde Traktor weiterfährt.

Um den Bedarf an Freiräumen auf der Transportbahn für Verfahrwege und Rangiermanöver möglichst gering zu halten, ist es essentiell, dass die Traktoren möglichst wendig sind, also insbesondere einen möglichst geringen Wendekreis besitzen, vorzugsweise auf der Stelle drehen können, und selbstverständlich in alle Richtungen fahren können.

In einer bevorzugten Ausführungsform besitzen die Traktoren deshalb nur drei im Dreieck, vorzugsweise in einem gleichseitigen Dreieck, oder vier im Viereck angeordnete, unabhängig voneinander antreibbare Räder, deren geometrische Rotationsachsen sich z. B. in einem einzigen Punkt treffen und die sich beispielsweise an den Ecken eines in der Aufsicht ebenfalls dreieckigen oder runden Traktors befinden.

Durch spezifische Ansteuerung der einzelnen Räder - kann jede gewünschte Verfahrrichtung sowie ein Drehen auf der Stelle realisiert werden - wenn die Räder in der Aufsicht betrachtet z. B. Tangenten an einem durch alle drei Räder gehenden Kreis sind.

Um einen zu starken Verschleiß an den Rädern, die in diesem Fall häufig schräg zu ihrer Abrollrichtung oder gar lotrecht hierzu bewegt werden, zu vermeiden, werden Räder mit in die Lauffläche integrierten Querschieberollen eingesetzt, die vorzugsweise eine ballige Kontur besitzen, wie dies prinzipiell aus den Rollbahnen von Fördersystemen bereits bekannt ist.

Die Traktoren verfügen des Weiteren über eine eigene Energieversorgung, vorzugsweise einen elektrischen Energiespeicher in Form eines Akkumulators, der an festgelegten Wartepositionen für die Traktoren über eine dort vorhandene Nachladestation automatisch nachgeladen werden kann. Solche Nachladestationen können auch an den Be- und Entladestationen oder Bearbeitungs-Stationen vorhanden sein.

Wenn bei einem solchen Transportsystem beispielsweise eine Verschmutzung der Transportbahn durch ein verschüttetes pulverförmiges oder flüssiges Transportprodukt erfolgt, was das Lesen der Markierungen auf der Transportbahn durch den optischen Sensor des Traktors verhindern würde, wird dies einfach manuell beseitigt, indem der Bediener von außen mit der Hand die Transportbahn reinigt.

Dieses Problem wird vermieden, wenn die optischen Markierungen, an denen sich die Traktoren orientieren, an der Decke über der Transportbahn angeordnet werden, jedoch erfordert dies eine zusätzliche Ebene.

Eine andere zu erwartende Störung ist ein Traktor, der liegen geblieben ist oder empfangene Signale völlig falsch umsetzt. Der wenigstens eine On-Board-Prozessor muss in der Lage sein, Fehlfunktionen des Traktors zu erkennen und in diesem Fall als Notmaßnahme den Traktor stillzusetzen.

Zu diesem Zweck sind die einzelnen Aufgaben teilweise auf mehrere Prozessoren verteilt, wobei einer vorzugsweise als so genannter Watchdog dient, der Abstürze des Hauptprozessors im Traktor erkennen soll und ihn im Zweifel durch Reset in den Ausgangszustand bringt.

Darüber hinaus steht manuelle Fehlerbehebung im Vordergrund: Als erste Maßnahme kann der Bediener eine am Traktor vorhandene Reset- Taste drücken, und dadurch die Software der Onboard-Steuerung wieder in den Ausgangszustand bringt. Falls dies nicht ausreicht, muss der Traktor und gegebenenfalls das gesamte Gespann, als auch samt Ladung, von einem Bediener von der Transportbahn genommen und gegen einen funktionierenden Traktor ausgetauscht werden oder hinter einem nicht umfahrbaren Hindernis wieder aufgesetzt werden, wobei natürlich die schnellstmögliche, auch manuelle, Entfernung des Hindernisses angestrebt werden muss.

Umgekehrt erkennt der Hauptprozessor Fehlfunktionen der ihm untergeordneten Prozessoren anhand von Widersprüchen aus deren Meldungen und ggf. Informationen aus direkt angeschlossenen Sensoren, ausgewerteten Kamerabildern und/oder Informationen vom Zentralrechner.

Ob es sich mechanisch bei den Be- und Entladestationen um manuelles Be- und Entladen oder um Roboter mit Greifern oder Saugern, um Klapp- oder Kipplösungen oder andere automatische Lösungen handelt, ist dabei unerheblich, jedoch sei klargestellt, dass eine Zentralsteuerung dann selbstverständlich auch diese automatischen Be- und Entladestationen steuern muss, ebenso wie sie einen Aufzug oder ein anderes Verbringungsmittel von einer zur anderen Etage der Transportbahn ebenfalls mit steuern muss.

Ebenso können diese Greifer stationär oder auf einem Traktor angeordnet sein.

Die Transportbahn selbst besteht aus einer möglichst ebenen Fläche, auf der sich die Traktoren mit den Anhängern möglichst unbeschränkt von Hindernissen wie Stützen und ähnlichem möglichst frei bewegen können sollen.

In der Regel wird die Transportbahn nicht ebenerdig, sondern erhöht, angeordnet sein, so dass die Transportbahn über Stützen und/oder Tragwerke stabil aufgeständert werden muss, was je nach Größe der Transportbahn in den jeweils darunter liegenden Transportbahnen zwangsweise Stützen in gewissen Abständen erfordert.

Bevorzugt liegen die Bodenplatten dabei auf den Stützen und Fachwerken jedoch nur lose auf oder sind leicht demontierbar befestigt.

Die Bodenplatten können eine Randaufwölbung als Absturzsicherung für die Traktoren aufweisen, oder die untere Ebene eines im Querschnitt rechteckigen Kanals wird als Transportbahn benutzt und die Unterseite der oberen Ebene zum Aufbringen der optischen Markierungen.

Die Transportbahn bzw. die einzelnen Bodenplatten besitzen vorzugsweise einen Schichtaufbau, der dem üblichen Fußboden-Laminat entspricht, also
- eine die Tragfähigkeit gewährleistende untere Schicht z. B. aus Holz, die selbst wieder aus mehreren Einzelschichten bestehen kann,
- auf deren Oberseite eine Bedruckung oder Beschichtung mit einer vorgegebenen optischen Struktur, die unter anderem auch die Markierungen, insbesondere optischen Markierungen, enthält und
- darüber eine transparente Schicht aus möglichst abriebfestem Material, insbesondere Kunststoff, auf dem die Anhänger und Traktoren fahren.

Da solche Bodenplatten mit den vorhandenen Maschinen für Laminat-Bodenbeläge sehr kostengünstig erzeugt werden können, kann die gesamte Transportbahn zu geringen Kosten erstellt werden.

Hinsichtlich der Kupplung der Traktoren an die Anhänger, aber auch an einen anderen Traktor, gibt es prinzipiell zwei Möglichkeiten:
Die Erste besteht darin, dass es an den beiden zu verbindenden Fahrzeugen nur einen einzigen Verbindungspunkt gibt, und um diesen Verbindungspunkt - der beispielsweise das vordere Ende einer Deichsel sein kann, die sich am Anhänger befindet - eine Verdrehung der beiden Fahrzeuge um die Hochachse zueinander möglich ist.

Diese Drehbarkeit verringert den Raumbedarf für das Rangieren, erschwert jedoch den Rangiervorgang selbst ganz erheblich.

Die andere Möglichkeit besteht darin, beim Aneinanderkuppeln zweier Einheiten diese drehfest, also als in der Aufsicht betrachtet starre Einheit, zu koppeln, was am einfachsten möglich ist durch in Querrichtung zwei beabstandete Kupplungseinheiten nebeneinander, die beide einrasten. Das Verhalten beim Rangieren, wie etwa beim rückwärts einparken eines Traktors mit Anhänger, ist in diesem Fall leichter zu berechnen und durch eine automatische Steuerung einfacher zu realisieren.

Durch die aus dem Stand in jede Richtung startenden Traktoren ist es dann auch möglich, den Platzbedarf für das Rangieren annähernd so gering zu halten wie bei der ersten Alternative einer drehbaren Kopplung.

Abhängig von dem mechanischen Aufwand und den Kosten der Kupplung am Traktor kann der Traktor eine solche Kupplung nur an einer Stirnseite oder an jeder seiner Stirnseiten besitzen, wobei letzteres den baulichen Aufwand vergrößert, jedoch die Rangierzeiten reduziert.

Neben den beschriebenen Traktoren zum Ankuppeln der beschriebenen Anhänger kann es im gleichen Lager auch Hub-Traktoren geben, die in der Lage sind, mittels eines Greifers direkt, also ohne Anhänger, Produkte zu ergreifen und während des Transports an dem Hub-Traktor zu halten. Dies ermöglicht den Transport von Produkten auf der Transportbahn ohne Anhänger, was jedoch nur bei Produkten sinnvoll ist, die z.B. im Vergleich zum Gewicht des Traktors relativ leicht sind, insbesondere deutlich leichter als der des Traktors selbst.

### c) Ausführungsbeispiele

Ausführungsformen gemäß der Erfindung sind im Folgenden beispielhaft näher beschrieben. Es zeigen:
- Fig. 1a:: eine Transportbahn in der Aufsicht,
- Fig. 1b:: eine Transportbahn mit mehreren Etagen übereinander in der Seitenansicht,
- Fig. 2:: vergrößerte Ausschnitte aus einer Transportbahn,
- Fig. 3:: Traktor und Anhänger in der Seitenansicht und in der Aufsicht,
- Fig. 4:: eine Bauform einer Kupplung.

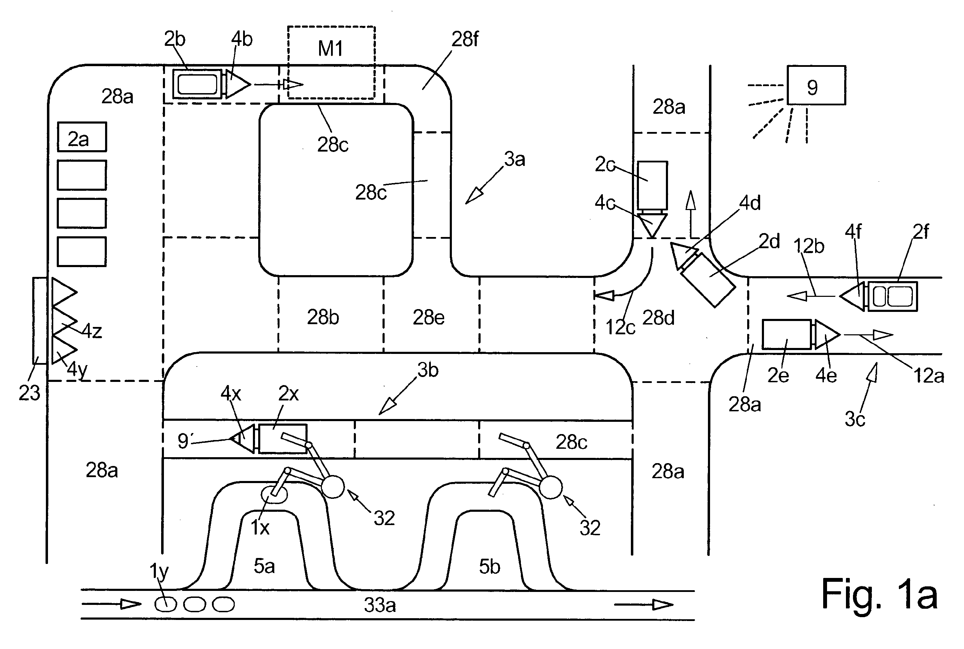

Fig. 1a zeigt in der Aufsicht Transportbahnen 3a... auf der Anhänger 2a,... mit Produkten 1a,... dorthin verfahren werden, wo sie anderweitig benötigt werden.

Die Transportbahnen 3a,b sind dabei jeweils aus einzelnen, aneinander sto-ßenden Bodenplatten 28a - 28f zusammengesetzt, die unterschiedliche Gestalt aufweisen können, z. B.:
- gerade verlaufende Bodenplatten 28a mit doppelter Breite, also ausreichend breit, dass zwei Traktoren 4a,b mit oder ohne angehängtem Anhänger 2a,b aneinander vorbeifahren können,
- gerade verlaufende Bodenplatten 28b mit geringerer Länge und doppelter Breite,
- gerade Bodenplatten 28c mit einfacher Breite,
- Kreuzung 28d mit doppelter Breite,
- Abzweigung 28e mit doppelter Breite bei der Hauptrichtung und einfacher Breite bei der Abzweigung,
- Bogen 28f mit einfacher Breite.

Bereits mit einer Grundausstattung von rechteckigen Platten können durch rechtwinkliges Aneinandersetzen der Bodenplatten zumindest rechtwinklige Abzweigungen und Kreuzungen hergestellt werden. Vorzugsweise gibt es für Abzweigungen und Kreuzungen jedoch spezielle Elemente mit gerundeten Innenecken, oder die gerundeten in den Ecken als zusätzliche Elemente die ein besseres Einfahren in die Abzweigung erlauben wie auch dargestellt.

Ein Teil der Transportbahn, wie hier im linken oberen Eck, kann durch rasterartiges Zusammensetzen von Bodenplatten z. B. 28a auch zu einer Lagerfläche erweitert werden, auf der dann Anhänger 2a.. beladen oder unbeladen nebeneinander abgestellt werden können.

Primär jedoch dienen die Transportbahnen 3a... dazu, um Produkte 1a... mit Hilfe der Traktoren 4a... und Anhänger 2a... entlang von einer Zentralsteuerung 9 drahtlos übermittelten Fahrtrouten 12a... in den Arbeitsbereich von Maschinen z. B. M1 zu bringen, an der die Produkte meist angehalten und in irgendeiner Form bearbeitet werden und anschließend weiter transportiert werden.

Das An- und Abliefern der Produkte alleine zu den Be- und Entladestationen 5a... , an denen die Produkte auf Anhänger oder Traktoren geladen werden oder abgeladen werden, geschieht in diesem Fall mit Hilfe jeweils eines Förderbandes 33a,b, wobei vorzugsweise an den einzelnen Be-/Entladestationen 5a... eine Ausschleusung der Produkte von dem durchgehenden Förderband erfolgt, damit das Produkt 1x zum Umlagern an der Beladestation 5a oder auch einer Entladestation stillsteht und von dem Roboter 32 erkannt und ergriffen und auf z. B. einen Anhänger 2x umgeladen werden kann, was in der Regel mittels Saugern anstelle von mechanischen Greifern geschieht.

Das Wesentliche der Erfindung besteht darin, dass die Anhänger 2a,... keinen Antrieb besitzen, sondern auf der Transportbahn 3a,... mit Hilfe von motorisch angetriebenen Traktoren 4a,b,... auf der Transportbahn 3a,... verfahren oder verschoben werden, im abgestellten Zustand auf der ohnehin im Idealfall genau horizontalen Transportbahn 3a,..., jedoch selbsthemmend stehen.

Von den Traktoren 4a, b,... werden die Anhänger 2a, b,... vorzugsweise jeweils einzeln zwischen z. B. einer Beladestation z. B. 5a zu einer der Maschine M1 bewegt, wo das Produkt von der Maschine bearbeitet wird.

Es können auch weitere Bearbeitungspositionen vorhanden sein, an denen die auf den Anhängern 2a befindlichen Produkte 1a,... beispielsweise mit Etiketten versehen, gewogen oder anderweitig bearbeitet werden.

Zu diesem Zweck sollte die Transportbahn 3a möglichst frei von Hindernissen, also auch frei von Stützen oder Ähnlichem, sein, um die Beweglichkeit der Traktoren 4a,b,... und daran angekoppelten Anhängern 2a,b,... möglichst wenig zu behindern.

Alle Bewegungen aller bewegten Elemente, also die Fahrtrouten und Verfahrzeitpunkte bzw. -Zeiträume der Traktoren 4a,b, die Steuerung der Förderbänder 33a,b und insbesondere deren Ausschleusungen zu den Be- und Entladestationen 5a..., 6a..., die Bewegung der Roboter 32 und auch eines ggf. vorhandenen Aufzuges 14, der die übereinander angeordneten Transportbahnen 3a,b eines mehrgeschossigen Lagers miteinander verbindet, werden von einer Zentralsteuerung 9 gesteuert, wobei die Signalverbindung zu den Traktoren 4a,b,... drahtlos erfolgt, damit sich diese unabhängig voneinander und frei auf der Transportbahn 3a,b bewegen können.

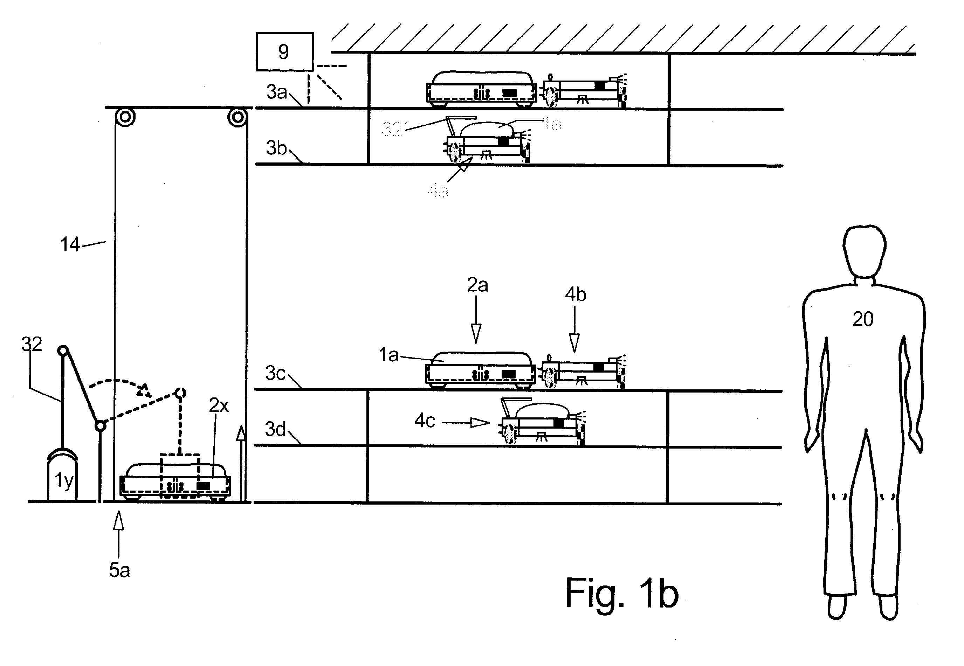

Fig. 1b zeigt in der Seitenansicht eine solch mehrgeschossige Transportbahn mit übereinander angeordneten Transportbahnen 3a-d in zwei Varianten, nämlich die Transportbahnen 3a, b von der Decke abgehängt und die Transportbahnen 3c, d vom Boden aufgeständert. Aus dem daneben dargestellten Bediener 20 ersichtlich wird, dass der vertikale Abstand der Transportbahnen 3fc, d in der Regel ausreicht, um bei Bedarf hineinzugreifen.

An der linken Stirnseite der Transportbahn ist der Aufzug 14 dargestellt, der von der untersten bis zur obersten Transportbahn 3d - 3a durchgeht und auf jeder Etage halten kann.

Ist die Höhendifferenz nicht allzu groß, kann sie anstelle eines Aufzuges auch durch eine schräge Ebene überwunden werden, beispielsweise in Form einer spiralig gewickelten schrägen Rampe wie die Auffahrt in einem Parkhaus.

Auf der Etage 3b und d der Transportbahn ist ein Traktor 4a, c dargestellt, der unmittelbar selbst ein Produkt 1a trägt sowie einen Roboter 32' zum Be- und Entladen, und deshalb keinen Anhänger 2a zum Transportieren dieses Produktes 1a benötigt.

Solche von der Decke abgehängten Transportbahnen können ohne Beeinträchtigung von auf dem Untergrund stehenden Maschinen oder anderen Einrichtungen verlaufen, so dass ihr Aufwand für Montage, Demontage und Umbau im Rahmen bleibt, aber vor allem der Sicherungsaufwand gegenüber Menschen sehr gering ist.

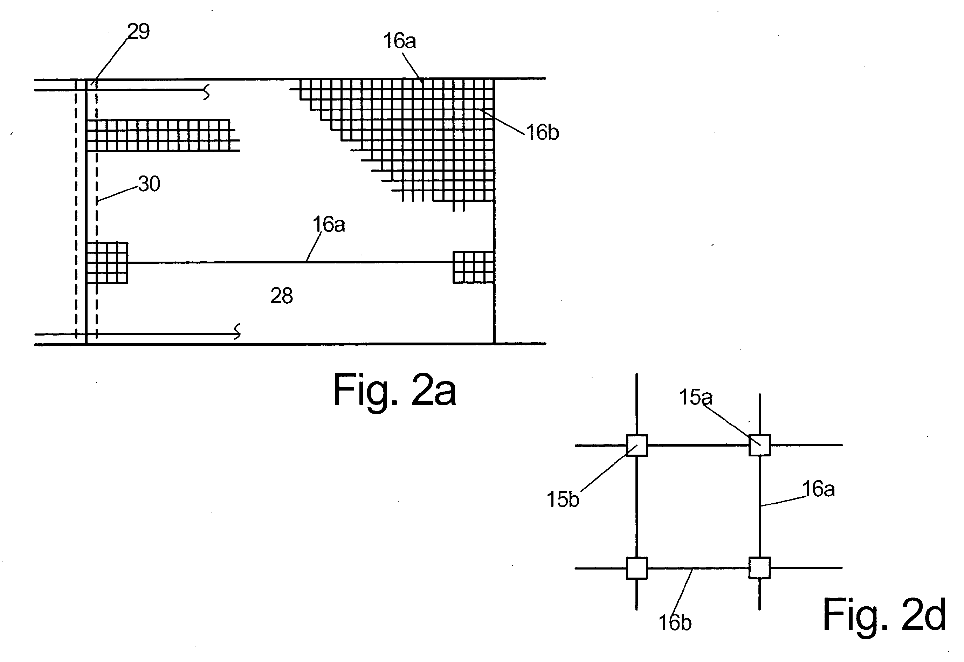

Fig. 2a zeigt in der Aufsicht einen Ausschnitt aus einer Transportbahn 3a, die beispielsweise aus einer Vielzahl rechteckiger oder auch anders geformter Bodenplatten 28 zusammengesetzt sein kann, die hintereinander angeordnet sind und in den Außenecken, an denen jeweils zwei Lagerplatten 28 zusammenstoßen, von einer Stütze 29 getragen werden können.

Zwischen den Stützen 29 können sich zusätzlich Tragwerke 30 unter den Berührungskanten je zweier Bodenplatten 28 erstrecken.

In der rechten oberen Ecke - in der Praxis bedecken diese optischen Markierungen die gesamte Fläche aller Bodenplatten 28, und somit der gesamten Transportbahn 3a,b,... - der Bodenplatte 28 ist weiterhin ein gleichmäßiges System aus längs oder quer verlaufenden Rasterlinien 16a,b zu erkennen, welches eine Möglichkeit ist, wie sich die Traktoren 4a mit Hilfe auf diese Markierungen ansprechender Sensoren den vorgegebenen Weg finden, denn auf der Transportbahn 3a,b sind die Traktoren 4a,b nicht durch Schienen oder andere formschlüssige oder kraftschlüssige Elemente geführt, sondern frei verfahrbar entsprechend der von der Zentralsteuerung vorgegebenen Fahrtroute.

Um zu erkennen, in welchem Feld des Rasters man sich befindet, sind unterschiedliche Barcodes 15a,b,... in regelmäßigen Abständen, vorzugsweise in oder an jedem der aus den Rasterlinien 16a,b gebildeten Gefache, vorhanden.

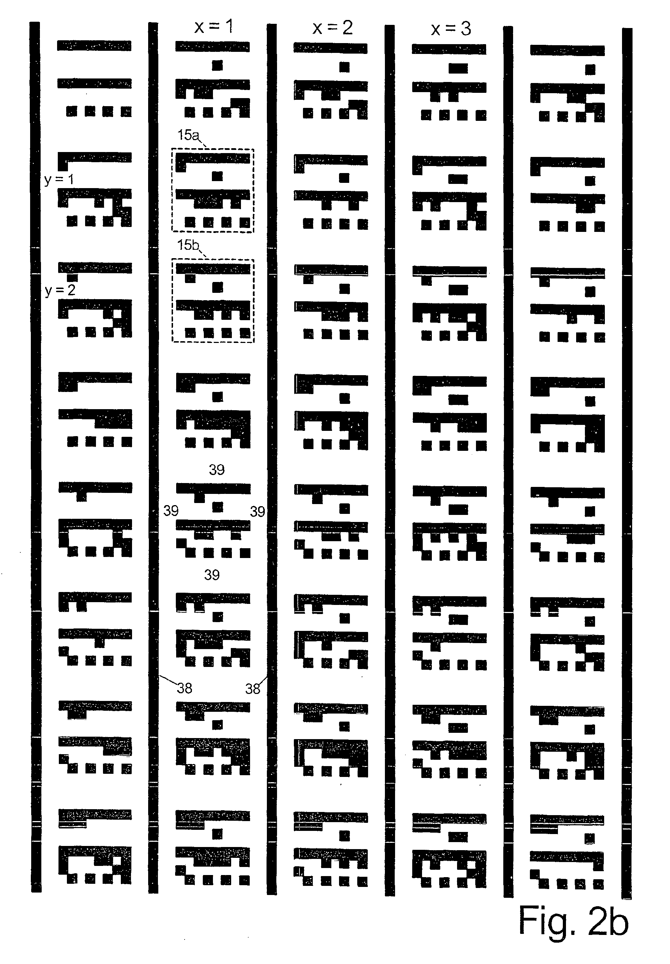

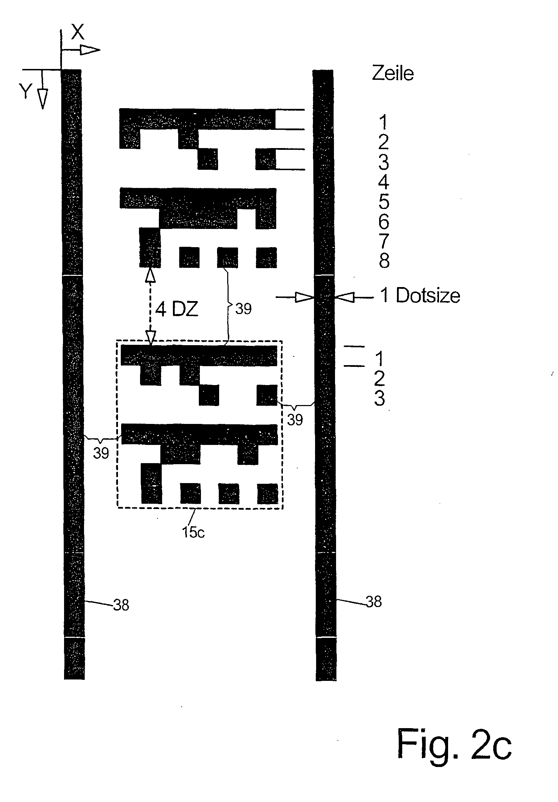

Fig. 2b und in Vergrößerung Fig. 2c zeigt eine Lösung, bei der jedes der Gefache im Wesentlichen vollständig von einem, solchen jeweils unterschiedlichen, Barcode 15a,b gefüllt ist, so dass an dem Wechsel vom einen zum nächsten Barcode der entsprechende Sensor des darüber fahrenden Traktors 4a,... erkennen kann, wo er sich befindet und in welche Richtung er sich bewegt.

Zu diesem Zweck sind einzelne rechteckige, in diesem Fall quadratische, zweidimensionale Barcodes spaltenweise untereinander angeordnet und durch nur in Spaltenrichtung dazwischen verlaufende Führungslinien 38 voneinander in Spalten x = 1, 2... getrennt.

Jeder Barcode besteht aus einer spezifischen Anordnung von schwarzen und weißen Quadraten, den sogenannten Dots, im vorliegenden Fall acht pro Zeile und acht pro Spalte in jedem Barcode.

Die Führungslinien 38 besitzen eine Breite entsprechend der Breite eines Dots, und die einzelnen Barcodes 15a, b... sind seitlich zu den Führungslinien 38 hin durch einen Leerraum 39 entsprechend der Breite zweier Dots beabstandet und in vertikaler Richtung die Barcodes 15a, b... zueinander durch einen Leerraum 39 von der Breite von vier Dots.

Mit Hilfe der Abfolge von schwarzen und weißen Dots innerhalb eines Barcodes 15a.. wird wie üblich die gewünschte Information verschlüsselt, wobei hier die von oben her gesehen erste, fünfte und achte Zeile jedes Barcodes nicht zur Informationsübermittlung dient, sondern lediglich der Lageerkennung, indem diese Zeilen in allen Barcodes gleich aussehen, nämlich z. B. die erste und fünfte Zeile durchgehend schwarz ist und in der achten Zeile nur die zweiten, vierten, sechsten und achten Dots schwarz sind und die dazwischenliegenden anderen Dots weiß.

Auf diese Art und Weise lässt sich mit den verbleibenden fünf Zeilen á acht bit ein Code mit 40 bit erzeugen, der beispielsweise aufgeteilt wird in reguläre 24 bit für die Verschlüsselung und einen zusätzlichen 16 bit CRC-Code als Sicherheit.

Die Barcodes 15a... sind dabei im Original kleiner als in Figur 2b dargestellt, und die Kamera 27 des Traktors, die die Barcodes abtastet, hat dabei eine solche Aufnahmefläche, dass sie immer wenigsten einen ganzen, vorzugsweise 1,5 bis 2 ganze Barcodes in ihrem Blickfeld hat.

Aufgrund der immer gleichen Gestaltung der Barcodes und der in einer Richtung durchgehenden Führungslinien 38, erkennt die Traktorsteuerung 9' mit Hilfe der Kamera 27 mindestens einen Barcode15a..., und damit anhand der darin verschlüsselten Informationen, an welcher Stelle einer Bodenplatte 28 sie sich befindet.

Zu diesem Zweck sind die einzelnen Bodenplatten 28 vorzugsweise identisch bedruckt und dadurch einerseits leicht austauschbar und mit der gleichen Druckvorlage herstellbar, so dass sich auf jeder Bodenplatte 28 der gleiche Barcode 15a... an immer der gleichen Stelle befindet.

Die Information, auf welcher der Bodenplatten 28, also in welchem Bereich innerhalb der Transportbahn 3a... sich der Traktor befindet, muss dann von einer anderen Informationsquelle stammen, insbesondere durch einfaches Mitzählen der Bodenplatten in Längs- und Bodenrichtung seitens der Onboard-Steuerung 9' oder durch den absoluten Standort wiedergebenden Markierungen, insbesondere Barcodes, außerhalb der Bodenplatten, z.B. an einem Geländer, einer Randerhöhung oder Zwischenelementen zwischen den Bodenplatten.

Sobald die Onboard-Steuerung 9' den momentan im Blickfeld der Kamera 27 befindlichen Barcode erkannt und hinsichtlich Lage und Informationsgehalt ausgewertet hat, ist der Traktorsteuerung 9' sowohl die Drehlage des Traktors 4a... bezogen auf z. B. die Führungslinien 38 auf weniger als 1° bekannt, als auch die Position, beispielsweise der Abstand der Kamera 27 vom Mittelpunkt des Barcodes 15a..., auf weniger als 1 mm bekannt.

Da sich die einzeln Barcodes 15a... auf einer Bodenplatte 28 in ihrem Informationsgehalt voneinander jeweils unterscheiden, also auf einer Bodenplatte 28 keine zwei identischen Barcodes 15a, b, vorhanden sind, kann ab dem Erkennen eines Barcodes die Onboard-Steuerung 9' den Traktor 4a... im Submillimeterbereich genau in die gewünschte Richtung und an die gewünschte Position fahren, indem sie ständig die im Blickfeld der Kamera 27 des Traktors 4a... liegenden Barcodes analysiert und in Abhängigkeit davon seine Fahrtrichtung und Fahrtgeschwindigkeit ändert.

Fig. 2d zeigt eine andere Lösung, bei der die Kreuzungspunkte der in beiden Richtungen der Ebene verlaufenden Rasterlinien 16a, b freigelassen sind und in den Kreuzungsbereichen jeweils ein Barcode 15a, b vorhanden ist.

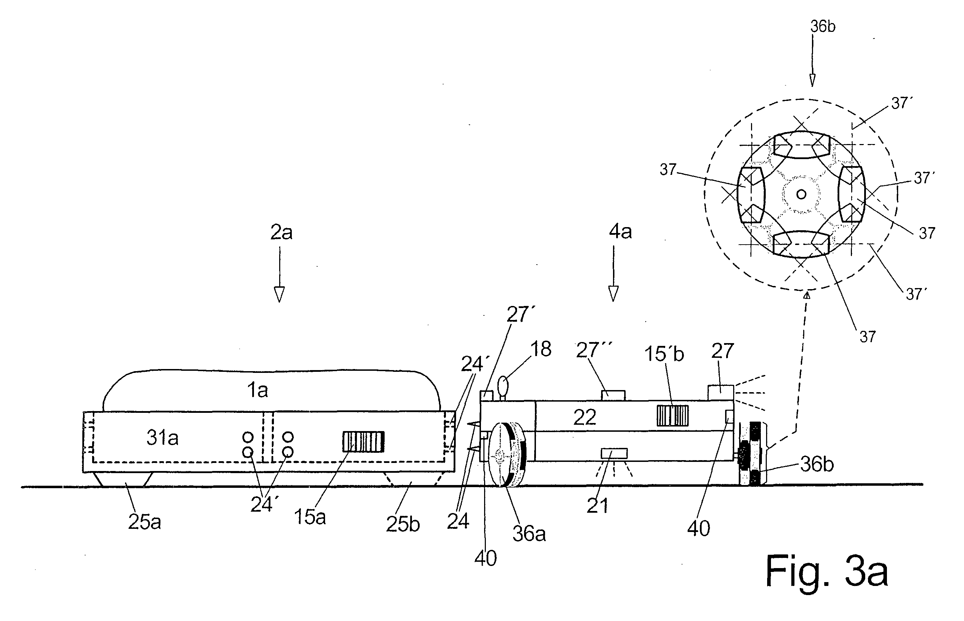

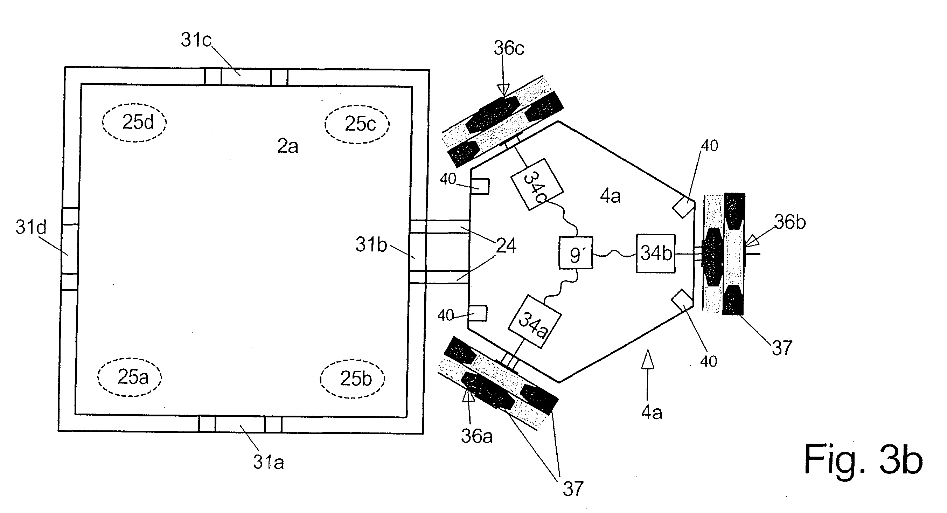

Die Figuren 3a und 3b zeigen in der Seitenansicht und in der Aufsicht jeweils ein Gespann aus Traktor 4a und Anhänger 2a.

In Fig. 3a sind beide voneinander getrennt und der Anhänger 2a beladen mit einem Produkt 1a, in der Aufsicht der Fig. 3b sind die beiden aneinander gekuppelt und damit fest verbunden, aus Übersichtlichkeitsgründen der Anhänger 2a jedoch unbeladen dargestellt.

Wie die Aufsicht der Fig. 3b zeigt, ist der Traktor etwa dreieckig mit drei in einem gleichseitigen Dreieck angeordneten Rädern 36a, b, c, deren Achsen sich im Zentrum des Traktors 4a geometrisch treffen und, die von jeweils einem separaten Motor 34a-c antreibbar sind und von der Steuerung 9', die in jedem Traktor vorhanden ist, hinsichtlich entweder Drehung um die eigene Achse oder Fahren in einer bestimmten Richtung gesteuert werden.

Dies ist möglich, indem in jedem der Räder 36a, b, c in der Lauffläche Querschieberollen 37 so angeordnet sind, dass deren Rotationsachse 37' parallel zur Tangentialrichtung des in Achsrichtung betrachteten Rades 36a... liegt, und die ballige Umfangsfläche dieser Querschieberollen 37 die Kontaktfläche des Rades 36a... gegenüber dem Untergrund bildet.

Die Querschieberollen 37 können dabei in zwei axial beabstandeten Kreisen und auf diesen Rädern 36a... in Umfangsrichtung versetzt zueinander angeordnet sein, um die Traktion zu verbessern.

Ein solcher Traktor 4a ist nicht nur extrem wendig, sondern kann auf der Stelle drehen und aus dem Stand in jede gewünschte Richtung losfahren, ohne überhaupt erst drehen zu müssen.

Dementsprechend hat jeder Traktor 4a,... vorzugsweise nicht nur auf einer, sondern auf allen drei seiner drei Seitenflächen Kupplungselemente 24, und zwar in der Aufsicht betrachtet, vorzugsweise jeweils zwei im Abstand nebeneinander liegende Kupplungselemente 24 in jeder Seitenfläche.

Mit diesen Kupplungselementen 24 kann der Traktor 4a - wie in Fig. 3a am besten zu erkennen - an einen Anhänger 2a,... heranfahren und diesen selbsttätig, also automatisch, ankuppeln und später - wenn sich der Anhänger 2a in der gewünschten Lagerposition befindet - auch wieder abkuppeln.

Zu diesem Zweck besitzt der Traktor 4a an seiner Kupplungsseite vorzugsweise zwei ebenfalls in Querrichtung beabstandete Abstandssensoren 40, vorzugsweise analoge Abstandssensoren, die vorzugsweise weiter voneinander beabstandet sind als die Kupplungselemente 24, um beim Heranfahren an den Anhänger 2a aufgrund unterschiedlich gemessener Distanzen einen leichten Winkelversatz zwischen Traktor 4a und Anhänger 2a festzustellen und vor dem Ankuppeln durch die entsprechende Ansteuerung der Motoren 34a, b, c, des Traktors 4a ausgleichen können.

Darüber hinaus verfügt der Traktor 4a.. - wie nur in Figur 3a eingezeichnet - zum einen über eine in Vorwärtsrichtung blickende Kamera 27 und/oder darüber hinaus eine in die Gegenrichtung, die Rückwärtsrichtung blickende zweite Kamera 27' und/oder darüber hinaus auch zur Seite hin blickende Seitenkameras 27", und/oder Abstandssensoren in insbesondere alle Richtungen, die beim anschließenden Fahren dazu dienen, auf optischem Wege automatisch zu kontrollieren, dass kein benachbarter z. B. abgestellter Anhänger oder ein anderes Hindernis berührt wird.

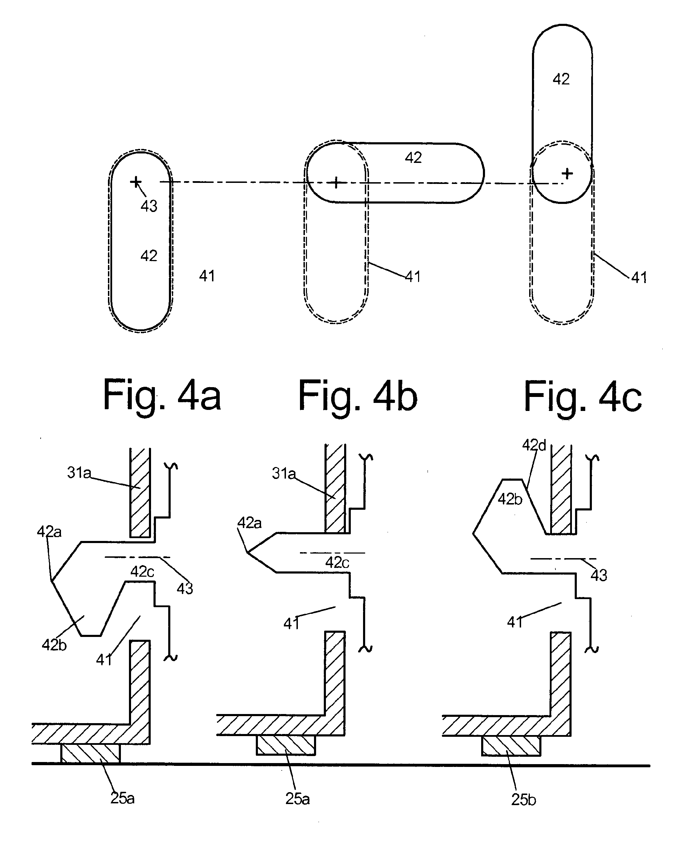

Eine mögliche Bauform einer Kupplung 24 zeigen die Figuren 4:
Auf der Seite des Anhängers 2a ist das Kupplungselement ein Kupplungsloch 41 in Form eines Langloches, welches beispielsweise vertikal angeordnet ist.
Auf der Seite des Traktors 4a ist das Kupplungselement ein Kupplungszapfen 42, der horizontal über die Frontfläche des Anhängers 4a hinaus vorsteht und um eine horizontale Schwenkachse 43 um beispielsweise 180° geschwenkt werden kann.

Der Kupplungszapfen 42 verfügt dabei an seinem freien Ende über eine radial von der Schwenkachse 43 in eine Richtung abstehende Verriegelungsnase 42b.

Wenn diese - in der Ankuppelstellung der Figur 4a - von der Schwenkachse 43 nach unten weist, kann der Kupplungszapfen 42b das Kupplungsloch 41 durchdringen, wobei dann ein leichter Seitenversatz zueinander durch eine an der freien Frontfläche des Kupplungszapfens 42 ausgebildete Zentrierspitze 42a ein Selbstzentrieren erleichtert.

Sobald das Andocken am Anhänger 2a beendet ist, also die Seitenwand 31 a... des Anhängers 2a an dem Längsanschlag 44, der am Traktor 4a um den hinteren Teil des Schaftes des Kupplungszapfens 42 herum ausgebildet ist, anliegt oder weit genug angenähert ist - was die Abstandssensoren 40 des Traktors 4a messen - wird der Kupplungszapfen 42 um die Schwenkachse 43 geschwenkt.

Da die Schwenkachse 43 exzentrisch im Schaft des Kupplungszapfens 42 angeordnet ist, der dadurch als Hubexzenter 42 wirkt, bewirkt das Verschwenken, dass die Oberseite des Schaftes des Kupplungszapfens 42 ansteigt und die Oberkante des Kupplungsloches 41 nach oben drückt und damit den Anhänger 2a am kupplungsseitigen Ende vom Untergrund abhebt, was bereits der Fall ist, wenn die Verriegelungsnase 42 horizontal abstrebt.

Durch Weiterdrehen der Verriegelungsnase 42b wird durch die vorhandene Schrägfläche 42d auf der Rückseite der Verriegelungsnase 42b die Seitenwand des Anhängers 2a zuverlässig an den Anschlag 44 schwerkraftbedingt herangezogen und dadurch eine Axialverriegelung des Anhängers 2a am Traktor 4a bewirkt.

Da die Transportbahn 3a eben ist und die Selbsthemmung des Anhängers 2a auf der Transportbahn ausreicht, sind hierfür keine weiteren Sicherungsmaßnahmen notwendig. Um die ausreichende Selbsthemmung zu erzielen, laufen die Anhänger 2a vorzugsweise nicht mit Hilfe von Rädern auf dem Untergrund, sondern lediglich mit Hilfe von Gleitelementen, hier vier im Viereck unter der Bodenfläche des Anhängers 2a angeordneten Gleitflächen 25a, b, c, d.

Diese können aus reibungsarmem Kunststoff, beispielsweise aus Teflon, oder auch aus gegenüber der Oberseite der Transportbahn 3a,... sehr viel weicherem Material, wie etwa Filz oder einem anderen Textilmaterial, bestehen, die gleichzeitig ein Verkratzen der Oberfläche der Transportbahn 3a durch Staub oder andere Verunreinigungen vermeidet, indem die Transportbahnen von dem z. B. aus Textilmaterial bestehenden Gleitflächen 25a,b,c,d gleichzeitig gereinigt werden.

Auch bei den Anhängern 2a,b - die gemäß der Aufsicht der Fig. 3b in der Aufsicht quadratisch dimensioniert sind - befinden sich Kupplungselemente 24' zum Zusammenwirken mit den Kupplungselementen 24 der Traktoren in jeder der Seitenflächen 31 a-d.

Ebenso trägt jeder Anhänger 2a und jeder Traktor 4a mindestens auf einer seiner Seitenflächen, besser auf allen Seitenflächen, einen Barcode 15a', 15b', damit anhand des Barcodes ein Anhänger 2a,... oder Traktor 4a,... auch mit Hilfe einer Kamera 27 oder 27" oder 27' erkannt werden kann, wie sie auf jedem Traktor 4a vorhanden ist und vorzugsweise horizontal geradeaus blickt oder auch schwenkbar angeordnet sein kann.

### BEZUGSZEICHENLISTE

- 1 a,: Produkt
- 2a,b,: Anhänger
- 3a,: Transportbahn
- 4a,: Traktor
- 4': Servicetraktor
- 5: Beladestation
- 6: Entladestation
- 7: Lagerposition
- 8: Parkposition
- 9: Zentralsteuerung
- 9': Onboard-Steuerung
- 12a: Fahrtroute
- 13: Warteposition
- 14: Aufzug
- 15a,b,: Barcodemarkierung
- 15'a,: Barcode
- 16a,: Rasterliniensystem
- 17: Reinigungstraktor
- 17': Reinigungsanhänger
- 18: Rettungsöse
- 19: Rückzugsseil
- 20: Bediener
- 21: Barcodeleser
- 22: Akkumulator
- 23: Ladestation
- 24, 24': Kupplung
- 25a,b: Gleitfläche
- 26: Signalkabel
- 27: Kamera
- 28: Bodenplatte
- 29: Stütze
- 30: Tragwerk
- 31a,b: Seitenwand
- 32, 32': Roboter
- 33a,b: Förderband
- 34a,b,c: Motor
- 35: Kippvorrichtung
- 36a,b,c: Rad
- 37: Querschieberolle
- 37': Rotationsachse
- 38: Führungslinie
- 39: Leerzone
- 40: Abstandssensor
- 41: Kupplungsloch
- 42: Kupplungszapfen
- 42a: Zentrierspitze
- 42b: Verriegelungsnase
- 42c: Hubexzenter
- 42d: Schrägfläche
- 43: Schwenkachse
- 44: Längsanschlag
- 45: Toleranzzone
- 46: Verfahrweg

- L1: Lagerposition
- W1: Warteposition

## Patentansprüche

1. Verfahren zum Transportieren und Puffern von Produkten (1a,...), mit Hilfe von motorisch angetriebenen, unabhängig voneinander verfahrbaren Traktoren (4a,...), wobei die Produkte auf den Traktoren (4a...) oder daran angekuppelten Anhängern (2a,b,...) liegen, auf einer wenigstens eingeschossigen Transportbahn (3a,...), wobei
- die Traktoren (4a...) auf der Transportbahn (3a,...) auf von einer Zentralsteuerung (9) vorgegebenen Fahrtrouten (12a...) zwischen Bearbeitungspositionen, insbesondere Belade (5)- und Entladestationen (6), Wartepositionen (13) für beladene Anhänger (2a,b,...) oder Produkte (1a,...) und Parkpositionen (8) für leere Anhänger hin und her verfahren,
- wobei die Fahrtrouten (12) als auch die Positionen (5-8) an der Transportbahn (3a,...) nicht formschlüssig festgelegt sind, und
- die Traktoren (4a,...) ihren Fahrtweg sowie die Bearbeitungspositionen exakt mit Hilfe von berührungslos, insbesondere optisch oder elektrisch abgetasteten, Markierungen auf der Transportbahn (3a,...), oder der Deckenfläche darüber, insbesondere Barcodemarkierungen (15a,b,...), finden,
**dadurch gekennzeichnet, dass**
- die Traktoren (4a...) entlang der Transportbahnen (3a...) in gegenläufigen Richtungen nebeneinander oder übereinander verfahren.

2. Verfahren nach Anspruch 1,
**dadurch gekennzeichnet, dass**
- das Verfahren auch das Verbringen zumindest des Anhängers (2a,b,...), insbesondere zusammen mit dem Traktor (4a,...), in eine andere Etage der Transportbahn (3a,...), insbesondere mittels eines Aufzuges (14), umfasst, und/oder
- die Traktoren (4a,...) mit der Zentralsteuerung (9) drahtlos, insbesondere mittels WLAN oder Ultraschall in Verbindung stehen und vom Zentralrechner außer der Start- und Zielposition ihrer Fahrtroute auch mindestens Daten über die einzuschlagende Fahrtroute sowie den Zeitpunkt und ggf. die Geschwindigkeit der Fahrt, insbesondere einschließlich Daten über die Gestalt der Transportbahnen erhalten, und/oder
- die Traktoren (4a,...) lenkbar und aus dem Stand in alle Richtungen verfahrbar sind und insbesondere auf der Stelle drehen können.

3. Verfahren nach einem der vorhergehenden Ansprüche,
**dadurch gekennzeichnet, dass**
- die Traktoren (4a..) ein und dieselbe Transportbahn abwechselnd zum Befahren in unterschiedliche Richtungen benutzt wird, und/oder
- zwischen den Traktoren (4a...) und deren On-board-Steuerungen (9') eine direkte Kommunikation zumindest bei gegenseitiger Annäherung unter einen Schwellenwert stattfindet, zumindest im Bereich von Kreuzungen und Verzweigungen der Transportbahnen (3a..).

4. Verfahren nach einem der vorhergehenden Ansprüche,
**dadurch gekennzeichnet, dass**
- die Traktoren (4a...) mit Hilfe von seitlichen Abstandssensoren in ihrem seitlichen Abstand zu einer Randaufwölbung der Transportbahn (3a...) alternativ oder zusätzlich gesteuert werden, und/oder
- von den einzelnen Bearbeitungspositionen Bedarfsmeldungen an die Zentralsteuerung (9) der Transportvorrichtung hinsichtlich der benötigten Produkte und deren Zeitpunkte gegeben wird, die in der Folge die Traktoren (4a..) entsprechend ansteuert.

5. Verfahren nach einem der vorhergehenden Ansprüche,
**dadurch gekennzeichnet, dass**
die Produkte (1a...) direkt auf den Traktoren (4a..) transportiert werden, und mit Hilfe von Ladeorganen der Traktoren, wie etwa Robotern 32', auf- und abgeladen, ergriffen und gegebenenfalls auf diesen gehalten werden.

6. Transportvorrichtung für Produkte (1a,...), mit
- ebenen Transportbahnen (3a,...), die körperlich durch möglichst wenige feststehende Hindernisse unterbrochen ist, und
- an der mehrere Bearbeitungspositionen, insbesondere Beladestationen (5) und Entladestationen (6), vorgegeben sind,
- auf denen Anhänger (2a,b,...) oder Traktoren (4a...), auf denen wenigstens je ein Produkt (1a,...) liegt, verfahren und abgestellt werden können,
- motorisch angetriebenen Traktoren (4a,...), die die Anhänger (2a,b...) auf der Transportbahn (3a,...) verfahren können und insbesondere an- und abkuppeln,
- einem Navigationssystem, damit die Traktoren (4a,...) einen vorgegebenen Verfahrweg auf der Transportbahn (3a,...) einnehmen können,
- einer Zentralsteuerung (9), die die mehreren gleichzeitig auf der Transportbahn (3a,...) fahrenden Traktoren (4a,...) hinsichtlich ihrer Verfahrwege und -zeiten steuert,
**dadurch gekennzeichnet, dass**
die Transportbahnen (3a...) wenigstens abschnittsweise eine Breite besitzen, die mindestens die doppelte Breite der Traktoren (4a...) oder der Anhänger (2a...) beträgt, je nachdem, welches von beiden eine größere Breite aufweist.

7. Transportiervorrichtung nach einem der vorhergehenden Vorrichtungsansprüche,
**dadurch gekennzeichnet, dass**
- die Traktoren (4a, b) eine On-board-Steuerung (9') aufweisen und/oder
- das Navigationssystem ein optisches Navigationssystem ist mit Barcodes (15'a), die insbesondere auf der Transportbahn (3a') angeordnet sind und jeder Traktor (4a) mindestens einen entsprechenden Barcodeleser (21) aufweist.

8. Vorrichtung nach einem der vorhergehenden Vorrichtungsansprüche,
**dadurch gekennzeichnet, dass**
die Transportbahnen (3a..) durchgängig eine Breite besitzen, die mindestens die doppelte Breite der Traktoren (4a...) oder der Anhänger (2a..) beträgt, je nachdem, welches von beiden eine größere Breite aufweist.

9. Vorrichtung nach einem der vorhergehenden Vorrichtungsansprüche,
**dadurch gekennzeichnet, dass**
- die Transportbahnen (3a) aus wenigen unterschiedlich gestalteten Bodenplatten (28) wie Rechtecken, Bögen, Verzweigungen, Kreuzungen, zusammengesetzt sind und insbesondere an ihren gegeneinander zu kontaktierenden Stirnflächen formschlüssige Positionier- und Verbindungselemente aufweisen, und/oder
- die Bodenplatten (28) jeweils identisch mit Barcodes (15a...) bedruckt sind, aber pro Bodenplatte (28) keine zwei identischen Barcodes vorhanden sind.

10. Vorrichtung nach einem der vorhergehenden Vorrichtungsansprüche,
**dadurch gekennzeichnet, dass**
- die Markierungen auf den Transportbahnen (3a...) wenigstens in Verlaufsrichtung der Transportbahnen (3a...) angeordnet sind und in dieser Richtung hintereinander gereihte Barcodes (15a...) und/oder Rasterlinien (16a) aufweisen, die sich wenigstens in der Mitte der für die Traktoren (4a...) vorgesehenen Fahrtroute befinden, insbesondere über die gesamte Breite der Transportbahn (3a...) vorhanden sind, und/oder
- die Markierungen auf der Transportbahn (3a,...) insbesondere rechtwinklig zueinander verlaufende Rasterlinien (16a,...) oder parallel zueinander verlaufende Führungslinien (38) umfasst und die einzelnen Markierungen, insbesondere Barcodes (15'a,...) im Inneren der Raster oder an den Kreuzungspunkten des Rasters oder zwischen den Führungslinien (38) angeordnet sind.

11. Vorrichtung nach einem der vorhergehenden Vorrichtungsansprüche,
**dadurch gekennzeichnet, dass**
- die Transportbahnen (3a) Ausweichstellen umfassen, und/oder
- die Transportbahnen (3a..) Stützelemente oder Aufhängeelemente für ihre Bodenplatten (28) umfassen, und/oder
- die Transportbahnen (3a, b) eine seitliche Randaufwölbung aufweisen.

12. Vorrichtung nach einem der vorhergehenden Vorrichtungsansprüche,
**dadurch gekennzeichnet, dass**
- die Traktoren (4a,...) mit einer Zentralsteuerung (9) drahtlos, insbesondere über WLAN in Verbindung stehen, und/oder
- die Bearbeitungsstationen auch Wartepositionen (13) für nicht im Einsatz befindliche Traktoren (4a,...) umfassen, und an den Wartepositionen eine Ladestation (23) für die traktorinternen Energiespeicher, insbesondere elektrische Akkumulatoren (22), vorhanden sind, und/oder
- die Anhänger (2a,b,...) so gestaltet sind, dass sie durch das Ankuppeln wenigstens im Bereich der Kupplung (24) leicht angehoben werden und die Anhänger insbesondere nur zwei Räder oder Gleitflächen (25a,b) auf der von der Kupplung (24) abgewandten Seite aufweisen, mit denen sie auf dem Untergrund aufliegen.

13. Vorrichtung nach einem der vorhergehenden Vorrichtungsansprüche,
**dadurch gekennzeichnet, dass**
- die Anhänger (2a,b,...) als Kupplung (24') in ihrer Seitenwand (31a,b) definiert angeordnete Kupplungselemente, insbesondere Kupplungsöffnungen, aufweisen, und die Kupplung (24, 24') in wenigstens zwei einander gegenüberliegenden Stirnflächen des Anhängers (2a,...), insbesondere in allen Seitenflächen des insbesondere rechteckigen Anhängers (2a,...) angeordnet sind, und/oder
- die Kupplung (24) aus zwei oder mehr in Querrichtung beabstandeten Kupplungsteilen besteht, die zu einer drehfesten Verkupplung von Anhänger (2a,...) und Traktor (4a,...) führen.

14. Vorrichtung nach einem der vorhergehenden Vorrichtungsansprüche,
**dadurch gekennzeichnet, dass**
- der Traktor (4a,...) wenigstens eine Kamera (27) aufweist und von Rechnersteuerung auf Handsteuerung umgestellt werden kann, und/oder
- bei einer Transportbahn (3a,...) in mehreren Etagen übereinander die Transportbahn aus rechteckigen Bodenplatten (28) zusammengesetzt ist, die auf regelmäßig angeordneten Stützen (29) oder Tragwerken (30) aufliegen und insbesondere nach oben abgehoben werden können.

15. Vorrichtung nach einem der vorhergehenden Vorrichtungsansprüche,
**dadurch gekennzeichnet, dass**
- die Anhänger (2a,b...) oder Traktoren (4a...) eine an die Art der Produkte (1a,...) angepasste Gestaltung ihrer Ladefläche bzw. ihres Innenraumes aufweisen und insbesondere von der Bodenfläche aufragende Seitenwände (31 a,b) besitzen,
- die Transportvorrichtung motorisch angetriebene Hub-Traktoren umfasst, die in der Lage sind, mit Hilfe einer Greifvorrichtung wenigstens ein Produkt zu ergreifen und damit sich selbst oder einen anderen Anhänger (2a...) oder Traktor (4a...) zu beladen.

## Claims

1. A method for transporting and buffering products (1a...) through motor driven tractors for (4a...) that are moveable independently from one another, wherein the products are placed on the tractors (4a...) or trailers (2a, b...) coupled thereto on a transport track (3a...) that has at least one floor, wherein
- the tractors (4a,...) drive back and forth on the transport track (3a,...) on driving routes (12a...) predetermined by a central control (9) between processing positions, in particular loading stations (5) and unloading stations (6), holding positions (13) for loaded trailers (2a, b...) or products (1a,...) and parking positions (8) for empty trailers,
- wherein the driving routes (12) and also the positions (5 - 8) at the transport track (3a,...) are not defined in a form locking manner, and
- wherein the tractors (4a,...) find their driving tracks and the processing positions exactly through markings on the transport track (3a,...) or of the ceiling surface there above, in particular bar code markings (15a, b...) that are scanned touch free, in particular optically or electrically,
**characterized in that**
- the tractors (4a...) move along the transport tracks (3a...) adjacent to one another or above one another in opposite directions.

2. The method according to claim 1,
**characterized in that**
- the moving also includes moving at least the trailer (2a,b,...), in particular together with the tractor (4a,...) to another floor of the transport track (3a,...), in particular through an elevator (14) and/or
- the tractors (4a,...) are connected with the central control (9) wirelessly, in particular through WLAN or ultra sound and obtain from a central computer besides start and target positions of their driving routes also at least data regarding the driving route to take and the point in time and optionally the speed of the driving, in particular data regarding the shape of the transport tracks and/or
- the tractors (4a,...) are moveable in a steerable manner and from a standstill in all directions and can in particular turn on a spot.

3. The method according to one of the preceding claims,
**characterized in that**
- the tractors (4a...) use an identical transport track in an alternating manner for driving in different directions and/or;
- direct communications occur between the tractors (4a...) and their onboard controls (9') at least for mutual approachment below a threshold value, at least in a portion of intersections and branch offs of the transport tracks (3a...).

4. The method according to one of the preceding claims,
**characterized in that**
- the tractors (4a...) are controlled through lateral distance sensors with respect to their lateral distance from an upward cambered border of the transport track (3a...) alternatively or additionally, and/or
- requirement reports are provided by the individual processing positions to the central control (9) of the transport device with respect to required products and their timing, wherein the central control subsequently controls the tractors (4a...) accordingly.

5. The method according to one of the preceding claims,
**characterized in that**
the products (1a...) are transported directly on the tractors (4a...) and the products are loaded and unloaded, gripped and optionally held on the tractors through loading organs of the tractors like for example robots (32').

6. A transport device for products (1a,...), comprising
- flat transport tracks (3a,...) which are physically interrupted by as few fixated obstacles as possible, and
- wherein plural processing positions, in particular loading stations (5) and unloading stations (6) are predetermined,
- wherein trailers (2a,b...) or tractors (4a,...) on which at least one respective product (1a,...) is placed can be moved and parked at the plural processing stations,
- motor driven tractors (4a,...) which can move and in particular couple and decouple the trailers (2a,b...) on the transport track (3a,...),
- a navigation system so that the tractors (4a,...) can take a predetermined movement path on the transport track (3a,...),
- a central control (9) which controls the plural tractors (4a,...) simultaneously running on the transport track (3a,...) with respect to their movement paths and times,
**characterized in that**
the transport tracks (3a,...) have a width at least in sections which is at least twice the width of the tractors (4a,...) or of the trailers (2a,...) depending which of them has a greater width.

7. The transport device according to one of the preceding device claims **characterized in that**
- the tractors (4a,b...) include an onboard control (9') and/or
- the navigation system is an optical navigation system with bar codes (15'a) which are arranged in particular on the transport track (3a') and each tractor (4a) includes at least one respective bar code reader (21).

8. The device according to one of the preceding device claims
**characterized in that**
the transport tracks (3a...) have a continuous width which corresponds to at least a double width of the tractors (4a...) or of the trailers (2a..) depending on which of them has a greater width.

9. The device according to one of the preceding device claims
**characterized in that**
- the transport tracks (3a) are assembled from few differently configured base plates (28)
like rectangles, arcs, branch offs, intersections and in particular include form locking positioning and connection elements at their contacting faces, and/or
- the base plates (28) are respectively identically imprinted with bar codes (15a,...) but no identical bar codes are provided per base plate (28).

10. The device according to one of the preceding device claims,
**characterized in that**
- the markings are arranged on the transport tracks (3a,...) at least in extension direction of the transport tracks (3a,...) and include bar codes (15a,...) and/or grid lines (16a) that are arranged in series in this direction, wherein the markings are arranged at least in the center of a driving route provided for the tractors (4a,...), in particular provided over the entire width of the transport path (3a...) and/or,
- the markings on the transport track (3a,...) include in particular grid lines (16a,...) extending perpendicular to one another or guide lines (38) extending parallel to one another and the individual markings, in particular bar codes (15'a...) are arranged in an interior of the grids or at intersection points of the grid or between the guide lines (38).

11. The device according to one of the preceding device claims,
**characterized in that**
- the transport tracks (3a) include passage spots, and/or
- the transports tracks (3a...) include support elements or suspension elements for their base plates (28) and/or
- the transport tracks (3a,b) include a lateral upward camber at their edges.

12. The device according to one of the preceding device claims,
**characterized in that**
- the tractors (4a...) are wirelessly connected with a central control (9), in particular through WLAN and/or
- the processing stations also include holding positions (13) for tractors (4a...) that are not operational and the holding positions are provided with loading stations (23) for the tractor internal energy storage devices, in particular electrical accumulators (22) and/or
- the trailers (2a, b...) are configured so that they are slightly raised through the coupling process at least in a portion of the coupling (24) and the trailers include in particular only two wheels or sliding surfaces (25a, b) on a side oriented away from the coupling (24) wherein the wheels or sliding surfaces contact the ground.

13. The device according to one of the preceding device claims,
**characterized in that**
- the trailers (2a, b...) include dedicated coupling elements configured as couplings (24') in their side walls (31 a, b), in particular coupling openings and the coupling (24, 24') are arranged at least in two opposing faces of the trailer (2a,...), in particular in all side surfaces of the in particular rectangular trailer (2a...) and/or
- the coupling (24) is made from two or more coupling elements offset in transversal direction, wherein the coupling elements provide a torque proof coupling of a trailer (2a,...) and a tractor (4a,...).

14. The device according to one of the preceding device claims,
**characterized in that**
- the tractor (4a,...) includes at least one camera (27) and is switchable from computer control to hand control and/or
- a transport track (3a,...) that includes plural levels above one another is assembled from rectangular base plates (28) which contact uniformly arranged struts (29) or trusses (30) and which can in particular be lifted off in upward direction.

15. The device according to one of the preceding device claims,
**characterized in that**
- the trailers (2a, b...) or tractors (4a,...) have a configuration of their loading surfaces or their interiors that is adapted to a type of products (1a,...) and in particular have side walls (31 a, b) extending upward from a base surface,
- the transport device includes motor driven lifting tractors which are capable to grip at least one product with a gripping device and to load themselves or another trailer (2a...) or tractor (4a...) with the product.

## Revendications

1. Procédé pour le transport et l'amortissement de produits (1a,...) à l'aide de tracteurs (4a,...) motorisés mobiles indépendamment les uns des autres, les produits se trouvant sur les tracteurs (4a,...) ou sur des remarques (2a, b,...) accouplés, sur une bande de transport (3a,...) à au moins un étage,
- les tracteurs (4a,...) se déplaçant en va et vient sur la voie de transport (3a,...) sur des trajets (12a,..) prédéfinis par une commande centrale (9) entre les positions de traitement, en particulier des stations de chargement (5) et de déchargement (6), des positions d'attente (13) pour des remorques chargées (2a, b,...) ou des produits (1a, ...) et des positions de parking (8) pour des remorques vides,
- les trajets (12) ainsi que les positions (5-8) n'étant pas fixés sur le trajet (3a,...) par adhérence de forme, et
- les tracteurs (4a, ...) trouvant le trajet ainsi que la position de traitement exactement à l'aide de marquages sans contact, en particulier scannés optiquement ou électriquement sur la bande de transport (3a,...) ou sur la surface de plafond, en particulier de marquage de code barre (15a, b,...),
**caractérisé en ce que**
- les tracteurs (4a,....) se déplacent le long des bandes de transport (3a, ...) se déplacent dans des directions opposées côte à côte ou superposés.

2. Procédé selon la revendication 1,
**caractérisé en ce que**
- le déplacement comprend également le séjour d'au moins la remorque (2a, b, ...) en particulier ensemble avec le tracteur (4a, ....) dans un autre étage de la bande de transport (3a,....) en particulier au moyen d'un élévateur (14), et/ou
- les tracteurs (4a,...) sont connectés à la commande centrale (9) sans fil, en particulier par WLAN ou ultrasons et reçoivent de l'ordinateur central outre la position de départ et cible de leur trajets ainsi que le mouvement éventuellement la vitesse du trajet, en particulier y compris des données sur la forme des bandes de transport, et/ou
- les tracteurs (4a,....) sont orientables et mobiles depuis leur position dans toutes les directions et en particulier peuvent tourner sur place.

3. Procédé selon l'une des revendications précédentes,
**caractérisé en ce que**
- les tracteurs (4a, ...) utilisent la même bande de transport en alternance pour différentes directions et/ou
- entre les tracteurs (4a,...) et leurs commandes embarquées (9'), il se produit une communication directe au moins au moment d'une approche réciproque en dessous d'une valeur seuil, au moins dans la zone d'intersection et de ramifications des bandes de transport (3a,...).

4. Procédé selon l'une des revendications précédentes,
**caractérisé en ce que**
- les tracteurs (4a, ...) sont commandés en alternance ou en supplément à l'aide de capteurs de distances latérales dans leur distance latérale par rapport à une distance latérale de bombage de bordure de la bande de transport (3a,...), et/ou
- il est donné à partir des positions individuelles de traitements des messages de besoins à la commande centrale (9) du dispositif de transport par rapport aux produits nécessités et leurs moments, laquelle commande les tracteurs (4a,...) à la suite.

5. Procédé selon l'une des revendications précédentes,
**caractérisé en ce que**
les produits (1a,....) sont transportés aux tracteurs (4a,..) et sont chargés et déchargés, sont saisis et sont maintenus le cas échéant à l'aide d'organes de chargement des tracteurs tels que des robots (32').

6. Dispositif de transport pour produits (1a,...) comprenant
- des bandes de transport planes (3a,...), lequel est interrompu corporellement par le moins d'obstacles fixes possibles et
- à plusieurs positions de traitement, en particulier des stations de chargement (5) et des stations de déchargement (6) sont prescrites,
- sur les remorques (2a, b,...) ou des tracteurs (4a,...) desquels, sur lesquels au moins se trouve un produit (1a,...), et peut être déplacé et déposé,
- des tracteurs motorisés (4a, ...) qui peuvent être déplacés et en particulier accoupler et désaccoupler les remorques (2a, b...) sur la bande de transport (3a,...)
- un système de navigation afin que les tracteurs (4a,...) puissent prendre un trajet prédéterminé sur la bande de transport (3a,...),
- une commande centrale (9), qui commande plusieurs tracteurs (4a,...) se déplaçant en même temps sur la bande de transport (3a,...) par rapport à leur durée et trajet de déplacement,
**caractérisé en ce que**
- les bandes de transport (3a,...) présentent au moins par section qui est au moins le double de la largeur des tracteurs (4a,...) ou des remorques (2a,...), selon laquelle des deux présentent la plus grande largeur.

7. Dispositif selon l'une des revendications de dispositif précédentes,
**caractérisé en ce que**
- les tracteurs (4a, b) présente une commande embarquée (9') et/ou
- le système de navigation est un système optique de navigation avec code-barres (15'a), qui sont disposés en particulier sur la bande de transport (3a') et chaque tracteur (4a) présente au moins un lecteur de codes-barres correspondant (21).

8. Dispositif selon l'une des revendications de dispositif précédentes,
**caractérisé en ce que**
les bandes de transport (3a,...) présentent une largeur constante qui représente au moins le double de la largeur des tracteurs (4a,...) ou des remorques (2a,...) selon lequel des deux présente une largeur plus importante.

9. Dispositif selon l'une des revendications de dispositif précédentes,
**caractérisé en ce que**
les bandes de transport (3a) se composent de plaques de sol (28) de forme similaire, tels que des rectangles, des arcs de cercle, des ramifications, des intersections et en particulier présentent sur leurs surfaces frontales se contactant des éléments de connexion et de position, et crabotée, et/ou
- les plaques de fond (28) sont imprimées respectivement de manière identique de code-barres (15a,...), mais chaque plaque de sol (28) ne présente aucun code-barres identique.

10. Dispositif selon l'une des revendications de dispositif précédentes,
**caractérisé en ce que**
- les marquages sont disposés sur les bandes de transport (3a,...) au moins dans la direction de passage des bandes de transport (3a,...) et présentent dans cette direction des codes-barres (15a,...) et/ou des lignes de trames (16a), qui se trouvent au moins au milieu du trajet prévu pour les tracteurs (4a,...), en particulier sur l'ensemble de la largeur de la bande de transport (3a,...), et/ou
- les marquages sur la bande de transport (3a,...) comprennent en particulier des lignes de trames (16a,...) s'étendant en particulier en angle droit entre elles ou des lignes de guidage (38) s'étendant parallèlement entre elles dans la direction de défilement des bandes de transport (3a,...) et chacun des marquages, en particulier des codes-barres (15a,...) sont disposés à l'intérieur des trames ou sur les points d'intersection de la trame ou entre les lignes de guidage (38).

11. Dispositif selon l'une des revendications de dispositif précédentes,
**caractérisé en ce que**
- les bandes de transport (3a) présentent des points d'évitement, et/ou
- les bandes de transport (3a..) présentent des éléments de support ou d'accrochage pour leurs plaques de fond (28), et/ou
- les bandes de transport (3a, b) présentent un bombement de bordure latérale.

12. Dispositif selon l'une des revendications de dispositif précédentes,
**caractérisé en ce que**
- les tracteurs (4a,...) sont connectés sans fil à une commande centrale (9) en particulier par WLAN, et/ou
- les postes de traitement comprennent également des positions d'attente (13) pour des tracteurs (4a,...) qui ne sont pas en service et aux positions d'attente, il y a une station de chargement (23) pour les accumulateurs d'énergie internes aux tracteurs, en particulier des accumulateurs électriques (22), et/ou,
- les remorques (2a, b,...) sont réalisées de sorte qu'elles sont soulevées légèrement par l'accouplage d'au moins dans la zone de l'accouplement (24) et les remorques présentent en particulier que deux roues ou des surfaces de glissement (25a, b) sur la face opposée à l'accouplement (24), avec lesquelles elles s'appliquent sur le sol.

13. Dispositif de transport selon l'une des revendications de dispositif précédentes,
**caractérisé en ce que**
- les remorques (2a, b...) présentent en tant qu'accouplement (24') dans leur paroi latérale (31a, b) des éléments d'accouplement en particulier des ouvertures d'accouplement disposées de manière définie en tant qu'accouplement (24, 24') dans leur paroi latérale (31 a, b) d'ouvertures d'accouplement, dans au moins deux surfaces frontales opposées de la remorque (2a,...), en particulier dans toutes les surfaces latérales de la remorque (2a,...) en particulier rectangulaire, et/ou
- l'accouplement (24) se compose de deux ou de plusieurs pièces d'accouplement à distance dans la direction transversale, lesquelles résultent en un accouplement rigide en rotation de la remorque (2a,...) et du tracteur (4a,...).

14. Dispositif de transport selon l'une des revendications de dispositif précédentes,
**caractérisé en ce que**
- le tracteur (4a,...) présente au moins une caméra (27) et peut être commuté de la commande informatique à la commande manuelle et/ou
- dans le cas d'une bande de transport (3a,...) sur plusieurs étages superposés, la bande de transport est composée de plaques de fond rectangulaires (28) qui s'appliquent sur des supports (29) ou des portants (30) disposés à distance régulière et en particulier peuvent être soulevés vers le haut.

15. Dispositif de transport selon l'une des revendications de dispositif précédentes,
**caractérisé en ce que**
les remorques (2a, b...) ou les tracteurs (4a,...) présentent une forme adaptée à la sorte des produits (1a,...), de leur surface de chargement, respectivement de leur espace intérieur et possèdent en particulier des parois latérales (31 a, b) faisant saillie de la surface de fond.
- le dispositif de transport comprend des tracteurs de levage entraînés par moteur qui sont en mesure de saisir à l'aide d'un dispositif de préhension au moins un produit et de charger lui-même ou une autre remorque (2a,...) ou un tracteur (4a,...).
